# EUROPÄISCHE PATENTSCHRIFT

(11) **EP 2 802 620 B1**
(45) Veröffentlichungstag und Bekanntmachung des Hinweises auf die Patenterteilung: **04.05.2016**
(21) Anmeldenummer: 12810317.3
(22) Anmeldetag: 28.12.2012
(51) Int. Cl.: C08L 77/00, C08L 77/02, C08L 25/08, C08L 51/04, C08L 21/00, C08L 25/12

(54) **WITTERUNGSSTABILE THERMOPLASTISCHE FORMMASSEN AUF BASIS VON STYROLCOPOLYMEREN UND POLYAMIDEN MIT VERBESSERTER ZÄHIGKEIT**
WEATHER-PROOF THERMOPLASTIC MOULDING COMPOUNDS WITH IMPROVED TOUGHNESS ON THE BASIS OF STYRENE COPOLYMERS AND POLYAMIDES
MASSE DE MATIÈRE À MOULER THERMOPLASTIQUE RÉSISTANTE AUX INTEMPÉRIES, À BASE DE COPOLYMÈRES DE STYRÈNE ET DE POLYAMIDES AYANT UNE TÉNACITÉ AMÉLIORÉE

(30) Priorität: 11.01.2012 EP 12150749
(43) Veröffentlichungstag der Anmeldung: 19.11.2014
(73) Patentinhaber: INEOS Styrolution Europe GmbH, 60325 Frankfurt am Main (DE)
(72) Erfinder: WEBER, Martin, 67487 Maikammer (DE); BLINZLER, Marko, 68163 Mannheim (DE)
(74) Vertreter: Jacobi, Markus Alexander
(86) Internationale Anmeldenummer: PCT/EP2012/077054
(87) Internationale Veröffentlichungsnummer: WO 2013/104528

(56) Entgegenhaltungen:
- WO-A1-2005/071013
- WO-A1-2010/089245
- WO-A1-2010/089258

## Beschreibung

Die vorliegende Erfindung betrifft thermoplastische Formmassen enthaltend mindestens ein Polyamid, mindestens ein Styrolcopolymer, mindestens einen Pfropfkautschuk ohne olefinische Doppelbindungen in der Kautschukphase und mindestens ein Terpolymer aus Styrol, Acrylnitril und Maleinsäureanhydrid.

Stabilisierte thermoplastische Formmassen auf Basis von Acrylnitril-Butadien-Styrol-Copolymeren (ABS) sind seit Jahren bekannt und aufgrund ihres für viele Anwendungen günstigen Eigenschaftsprofils breit einsetzbar. In der Literatur sind auch thermo-plastische Formmassen bekannt, die Polyamide, Pfropfkautschuke und mindestens ein Copolymer auf Styrol-Basis enthalten (EP-A 0 202 214, EP-A 0 784 080, EP-A 0 402 528, WO 2005/071013). Solche thermoplastischen Formmassen finden insbesondere Verwendung bei der Herstellung von Formkörpern, Formteilen, Folien, Fasern und Schäumen, wobei beispielsweise die Formteile als Kraftfahrzeug-Bauteile eingesetzt werden können.

Binäre Blends aus Polyamiden und Styrol-Copolymeren weisen aufgrund der Unverträglichkeit zwischen Polyamid und SAN (Matrix Styrol-Acrylnitril-Copolymere) sehr schlechte Zähigkeit auf. Die Verwendung funktionalisierter SAN-Polymere ermöglicht eine signifikante Steigerung der Zähigkeit in Polyamid/Styrolcopolymer-Mischungen. Außerdem weisen solche Produkte interessante Eigenschaften, wie hohe Schlagzähigkeit, gute Fließfähigkeit und Chemikalienresistenz auf.
Untersuchungen zur in situ Verträglichkeitsvermittlung in Styrolcopolymer-PolyamidMischungen sind aus der Literatur bekannt (siehe V.J. Triacca, Polymer 32, 1401 (1991); B. Majundar, Polymer 35, 4263 (1994); C.W. Lee, J. Appl. Polym. Sci., 64, 1595 (1997); R.A. Kudva, Polymer 39, 2447 (1998); C. Lacasse, Adv. Polym. Techn. 18, 255 (1999); R.A. Kudva, Polymer 41, 239, 2000).
Die vorliegende Erfindung betrifft insbesondere eine thermoplastische Formmasse, die folgende Komponenten enthält (bzw. daraus besteht):
A) 3 bis 77 Gew.-% eines oder mehrerer Styrolcopolymere, als Komponente A,
B) 15 bis 89 Gew.-% eines oder mehrerer Polyamide, als Komponente B,
C) 5 bis 50 Gew.% zweier oder mehrerer Pfropfkautschuke ohne olefinische Doppelbindungen in der Kautschukphase, als Komponente C,
D) 1 bis 25 Gew.% eines Terpolymeren aus Styrol, Acrylnitril und Maleinsäureanhydrid, als Komponente D,
E) 2 bis 30 Gew.-% Kautschuk auf Basis von olefinischen Monomeren, Komponente E, wobei diese Kautschuke dadurch gekennzeichnet sind, dass sie
   a) keinen Kern-Schale-Aufbau aufweisen und
   b) mindestens 0,05 Gew.% einer funktionellen Gruppe aufweisen,
F) 0 bis 50 Gew.-% faser- oder teilchenförmigen Füllstoffs oder deren Mischungen, als Komponente F,
G) 0 bis 40 % weiterer Zusätze, als Komponente G.

Die Summe der Komponenten A bis G ergibt dabei 100 Gewichtsprozent.

Die als Komponente C) eingesetzte Mischung aus mindestens 2 verschiedenen Pfropfkautschuken besteht insbesondere aus mindestens zwei Kautschuken, die sich bezüglich ihrer Pfropfhüllen unterscheiden. Die als Komponente C) eingesetzte Mischung besteht häufig aus 2 oder 3 verschiedenen Pfropfkautschuken.

Vorzugsweise enthält dabei der erste Pfropfkautschuk eine Pfropfhülle aus Styrol und Acrylnitril. Vorzugsweise enthält dabei der zweite Pfropfkautschuk eine Pfropfhülle, die Glycidylmethacrylat enthält. Insbesondere enthält der zweite Pfropfkautschuke Pfropfhülle, die aus Glycidylmethacrylat und Methylmethacrylat besteht.

Die Erfindung betrifft auch eine thermoplastische Formmasse, enthaltend:
A) 10 bis 70 Gew.-% eines oder mehrerer Styrolcopolymere, Komponente A,
B) 20 bis 60 Gew.-% eines oder mehrerer Polyamide, als Komponente B,
C) 14 bis 35 Gew.% zweier oder mehrerer Pfropfkautschuke ohne olefinische Doppelbindungen in der Kautschukphase, als Komponente C,
D) 2 bis 10 Gew.% eines Terpolymeren aus Styrol, Acrylnitril und Maleinsäure-anhydrid, als Komponente D,
E) 3 bis 30 Gew.-% Kautschuk auf Basis von olefinischen Monomeren, als Komponente E, wobei diese Kautschuke dadurch gekennzeichnet sind, dass sie
   a) keinen Kern-Schale-Aufbau aufweisen und
   b) mindestens 0,05 Gew.% einer funktionellen Gruppe aufweisen,
F) 0 bis 50 Gew.-% faser- oder teilchenförmigen Füllstoffs oder deren Mischungen, als Komponente F,
G) 0 bis 40 % weiterer Zusätze, als Komponente G,
wobei die als Komponente C) eingesetzte Mischung aus mindestens zwei verschiedenen Pfropfkautschuken besteht, die sich bezüglich ihrer Pfropfhüllen unterscheiden. Auf die obige Beschreibung der Pfropfkautschuke wird verwiesen.

Die Erfindung betrifft auch eine thermoplastische Formmasse, enthaltend:
A) 10 bis 70 Gew.-% eines SAN-Copolymers, als Komponente A,
B) 20 bis 60 Gew.-% eines oder mehrerer Polyamide, als Komponente B,
C) 14 bis 35 Gew.% zweier oder mehrerer Pfropfkautschuke ohne olefinische Doppelbindungen in der Kautschukphase, als Komponente C,
D) 2 bis 10 Gew.% eines Styrol-Acrylnitril-Maleinsäureanhydrid-Terpolymers als Komponente D,
E) 3 bis 30 Gew.-% Kautschuk auf Basis von olefinischen Monomeren, als Komponente E, wobei diese Kautschuke dadurch gekennzeichnet sind, dass sie
   a) keinen Kern-Schale-Aufbau aufweisen und
   b) mindestens 0,05 Gew.% einer funktionellen Gruppe aufweisen,
F) 0 bis 50 Gew.-% faser- oder teilchenförmigen Füllstoffs oder deren Mischungen, als Komponente F,
G) 0 bis 40 % weiterer Zusätze, als Komponente G,
wobei die als Komponente C) eingesetzte Mischung aus mindestens zwei verschiedenen Pfropfkautschuken besteht, die sich nur bezüglich ihrer Pfropfhüllen unterscheiden.

Die Erfindung betrifft auch eine thermoplastische Formmassen, wobei der mittlere Teilchendurchmesser von Komponente C zwischen 50 bis 800 nm liegt.
Die Erfindung betrifft auch eine thermoplastische Formmassen, wobei man als Komponente C zwei verschiedenen Kautschuk-Komponenten einsetzt, wobei mindestens einer der Kautschuke eine bimodale Teilchengrößenverteilung aufweist.
Die Erfindung betrifft auch eine thermoplastische Formmasse, wobei man die Komponenten D zu E im Gewichtsverhältnis von 4:1 bis 0,25:1 einsetzt.
Die Erfindung betrifft auch eine thermoplastische Formmasse, wobei die Komponente B von 0,05 bis 0,5 Gew.-% Triacetondiamin (TAD)-Endgruppen aufweist.
Gegenstand ist auch ein Verfahren zur Herstellung von thermoplastischen Formmassen wie oben beschrieben, dadurch gekennzeichnet, dass man die Komponenten A, B, C, D und E, sowie ggf. F und G, bei Temperaturen von 100 bis 300°C und einem Druck von 0,1 bis 5 MPa (1 bis 50 bar) in beliebiger Reihenfolge miteinander vermischt, anschließend knetet und extrudiert.
Gegenstand ist auch ein Verfahren zur Herstellung von thermoplastischen Formmassen, wobei man zunächst ein Teil der Komponente D mit einem Teil der Komponente B zu einem Masterbatch im Verhältnis 1:1 bis 1:2 vormischt und anschließend mit weiteren Komponenten A, B, C, D und E, sowie ggf. F und G, zu der thermoplastischen Formmasse vermischt.
Die Erfindung betrifft auch die Verwendung von thermoplastischen Formmassen zur Herstellung von Formkörpern, Folien oder Fasern. Die Verwendung der thermoplastischen Formmassen erfolgt oftmals zur Herstellung von Formkörpern für KFZ-Bauteile oder Teile von Elektronikgeräten.
Gegenstand sind auch Formkörper, Fasern oder Folien enthaltend bzw. bestehend aus einer thermoplastischen Formmasse wie oben beschrieben.
Die Erfindung betrifft auch Verfahren zur Herstellung dieser Formmassen, deren Verwendung zur Herstellung von Formkörpern (z.B. Haushaltsartikel, elektronischen Bauteilen, medizinische Geräte, Kfz-Bauteile), Folien oder Fasern sowie diese Formkörper Folien und Fasern selbst. Durch die erfindungswesentliche spezielle Auswahl der einzelnen Komponenten und ihrer speziellen Mengenanteile weisen die erfindungsgemäßen Formmassen gegenüber den bekannten Formmassen eine verbesserte Witterungsbeständigkeit, d.h. eine verbesserte Wärme-, Licht- und/oder Sauerstoffbeständigkeit, auf. Außerdem betrifft die Erfindung die Verwendung der Formmassen zur Herstellung von Formkörpern, beispielsweise für Haushaltsartikel, elektronische Bauteile, medizinisch-technische Geräte, und Kfz-Bauteile. Die erfindungsgemäßen Gegenstände, Verfahren und Verwendungen werden im Folgenden näher beschrieben.

Die erfindungsgemäßen Formmassen enthalten die Komponenten bezogen auf das Gesamtgewicht (Masse) der Komponenten A, B, C, D, E (notwendige Komponenten) und ggf. F und G (optionale Komponenten), in solchen Mengen, dass das Gesamtgewicht insgesamt 100 Gewichtsprozent ergibt.
Die Erfindung betrifft insbesondere eine thermoplastische Formmasse, die enthält:
a) 3 bis 77 Gew.-%, bevorzugt 10 bis 70 Gew.-% der Komponente A
b) 15 bis 89 Gew.-%, bevorzugt 20 bis 60 Gew.-% der Komponente B,
c) 5 bis 50 Gew.-%, bevorzugt 14 bis 35 Gew.-% der Komponente C,
d) 1 bis 25 Gew.-%, bevorzugt 2 bis 10 Gew.-% der Komponente D,
e) 2 bis 30 Gew.-%, bevorzugt 3 bis 20 Gew.-% der Komponente E,
f) 0 bis 50 Gew.-%, bevorzugt 0 bis 30 Gew% der Komponente F,
g) 0 bis 40 Gew.-%, bevorzugt 0 bis 20 Gew.-% der Komponente G.

Eine erfindungsgemäße Formmasse besteht beispielsweise, bezogen auf das Gesamtgewicht aller Komponenten, welche als Gesamtgewicht insgesamt 100 Gewichtsprozent ergeben:
a) 15 bis 25 Gew.-% der Komponente A
b) 35 bis 45 Gew.-% der Komponente B,
c) 14 bis 32 Gew.-% der Komponente C,
d) 2 bis 6 Gew.-% der Komponente D,
e) 2 bis 5 Gew.-% der Komponente E,
f) 0 bis 20 Gew.-% der Komponente F,
g) 0 bis 20 Gew.-% der Komponente G.

Als Verträglichkeitsvermittler eignen sich Styrol-Acrylnitril-Maleinsäureanhydrid (MA)-Terpolymere, Styrol-N-Phenylmaleinimid-Maleinsäureanhydrid-Terpolymere, Methylmethacrylat-Maleinsäureanhydrid (EP-A 0 946 644). In der Regel reagieren die Amino- bzw. Carboxyl-Endgruppen der Polyamide mit den funktionellen Gruppen der genannten Co- und Terpolymere, wobei in situ Copolymere entstehen, welche die Verträglichkeit zwischen der Styrolcopolymer- und der Polyamidphase herstellen. Solche Polymermischungen mit modifizierter Grenzfläche werden im Allgemeinen als Polymer-Legierungen bezeichnet (L.A. Utracki, "Polymer Alloys and Blends", Hanser Publishers, Munich Vienna New York, 1989).

Für viele Anwendungen weisen die bisher bekannten Styrolcopolymer und Polyamid enthaltenden Formmassen ungenügende Witterungsbeständigkeit (UV-Stabilität und Wärmealterungsbeständigkeit) auf. Eine Verbesserung der Witterungsbeständigkeit kann beispielsweise durch Verwendung von Schlagzähmodifiern erreicht werden, die keine olefinischen Doppelbindungen aufweisen. Ihre Verwendung kann neben höheren Stoffkosten auch zu einer signifikanten Verminderung der Kerbschlagzähigkeit bei niedrigen Temperaturen führen. Zudem können Polyamide mit sterisch gehinderten Piperidin-Endgruppen als HALS-Stabilisatoten eingesetzt werden. Die Verwendung der beispielsweise Triacetondiamin (TAD)-haltigen Formmassen führt jedoch unter ungünstigen Verarbeitungsbedingungen zu einem Abfall der Schädigungsarbeit bei niedrigen Temperaturen.

Aus WO 2005/040281 sind thermoplastische Formmassen bekannt, die Polyamide mit TAD-Endgruppen, Styrol-Acrylnitril-Maleinsäureanhydrid-Terpolymere, Pfropfkautschuke und häufig Phthalsäureanhydrid enthalten, Die beschriebenen Formmassen weisen nicht für alle Anwendungen ein optimales Eigenschaftsprofil auf.

Aus WO 2010/089258 sind witterungsstabile Formmassen auf Basis von Polyamid und Styrolcopolymeren ohne olefinische Doppelbindungen enthaltende Kautschuke bekannt, bei denen eine Verbesserung der Witterungsstabilität und eine geringe Abhängigkeit der Schädigungsarbeit von der Verarbeitungstemperatur erreicht wurde. Die Formmassen weisen jedoch zum Teil niedrige Kerbschlagzähigkeit bei -30°C auf.

Eine Aufgabe der vorliegenden Erfindung ist es daher, thermoplastische Formmassen auf Basis von Styrolcopolymeren und Polyamiden mit guter Witterungsbeständigkeit und guter Kerbschlagzähigkeit bei -30°C zur Verfügung zu stellen.

Diese Aufgabe wird durch die eingangs genannten Formmassen erfüllt. Überraschenderweise zeigen aus diesen Produkten hergestellte Bauteile auch gute Oberflächeneigenschaften und reduzierte Emissionsneigung.

### Zur Komponente A:

Als Komponente A enthalten die erfindungsgemäßen thermoplastischen Formmassen 3 bis 77 Gew.% mindestens eines Styrolcopolymeren. Als Styrolcopolymere sollen SAN oder andere kautschukfreie Styrolcopolymere verstanden werden. Als Komponente A enthalten die thermoplastischen Formmassen insbesondere ein oder mehrere Styrolcopolymere, die keine von Maleinsäureanhydrid abgeleiteten Einheiten aufweisen. Dabei können in den Copolymeren neben Styrol beliebige geeignete Comonomere vorliegen. Bevorzugt handelt es sich um ein Styrol-Acrylnitril-Copolymer oder α-Methylstyrol-Acrylnitril-Copolymer.

Als Komponente A der thermoplastischen Matrix M sind grundsätzlich alle dem Fachmann bekannten und in der Literatur beschriebenen Styrol-Acrylnitril-Copolymere, α-Methylstyrol-Acrylnitril-Copolymere oder deren Mischungen einsetzbar, sofern deren Mischungen eine Viskositätszahl VZ (gemessen nach DIN 53727 bei 25 °C als 0,5 gew.-%ige Lösung in Dimethylformamid; diese Messmethode gilt auch für alle im folgenden genannten Viskositätszahlen VZ) gleich oder kleiner als 105 ml/g, oftmals kleiner als 85 ml/g haben.

Bevorzugte Komponenten A sind aufgebaut aus 50 bis 90 Gew.-%, bevorzugt 60 bis 80 Gew.-%, insbesondere 65 bis 78 Gew.-%, Styrol und 10 bis 50 Gew.-%, bevorzugt 20 bis 40 Gew.-%, insbesondere 22 bis 35 Gew.-%, Acrylnitril sowie 0 bis 5 Gew.-%, bevorzugt 0 bis 4 Gew.-%, insbesondere 0 bis 3 Gew.-%, weitere Monomere, wobei die Gew.-% jeweils bezogen sind auf das Gewicht der Komponente A und zusammen 100 Gew.-% ergeben.

Weiterhin bevorzugte Komponenten A sind aufgebaut aus 50 bis 90 Gew.-%, bevorzugt 60 bis 80 Gew.%, insbesondere 65 bis 78 Gew.-%, α-Methylstyrol und 10 bis 50 Gew.-%, bevorzugt 20 bis 40 Gew.-%, insbesondere 22 bis 35 Gew.-%, Acrylnitril sowie 0 bis 5 Gew.-%, bevorzugt 0 bis 4 Gew.-%, insbesondere 0 bis 3 Gew.-%, weitere Monomere, wobei die Gew.-% jeweils bezogen sind auf das Gewicht der Komponente A und zusammen 100 Gew.-% ergeben.

Ebenfalls bevorzugte Komponenten A sind Mischungen dieser Styrol-Acrylnitril-Copolymere und dieser α-Methylstyrol-Acrylnitril-Copolymere.

Als oben genannte weitere Monomere sind alle copolymerisierbaren und von Maleinsäureanhydrid verschiedene Monomere einsetzbar, beispielsweise p-Methylstyrof, t-Butylstyrol, Vinylnaphthalin, Alkylacrylate und/oder Alkylmethacrylate, beispielsweise solche mit C₁- bis C₈-Alkylresten, N-Phenylmaleinimid oder deren Mischungen.

Die Copolymere der Komponente A lassen sich nach an sich bekannten Methoden herstellen. Sie lassen sich z. B. durch radikalische Polymerisation, insbesondere durch Emulsions-, Suspensions-, Lösungs- oder Massepolymerisation herstellen.

Die als Komponente A eingesetzten Styrolcopolymere sind bevorzugt kautschukfrei.

### Zur Komponente B:

Als Komponente B enthalten die erfindungsgemäßen thermoplastischen Formmassen 15 bis 89 Gew.% mindestens eines thermoplastischen Polyamids. Diese Polyamide enthalten häufig, bezogen auf die gesamte Komponente B, 0,05 bis 0,5 Gew.-%. vorzugsweise 0,1 bis 0,2 Gew.-% Triacetondiamin (TAD)-Endgruppen.

Bei Komponente B kann es sich um TAD-freie Polyamide, TAD-haltige Polyamide oder auch um Mischungen von Polyamiden mit TAD-Endgruppen mit Polyamiden ohne TAD-Endgruppen handeln. Insgesamt können bevorzugt auf die Komponente B bezogen 0,1 bis 0,2 Gew.-% Triacetondiamin-Endgruppen vorliegen. Bevorzugt liegen 0,14 bis 0,18 Gew.-% TAD-Endgruppen vor, insbesondere 0,15 bis 0,17 Gew.-% TAD-Endgruppen.

Als Komponente B wird oftmals ein Polyamid eingesetzt, von dessen Endgruppen sich mindestens eine von der Piperidinverbindung TAD ableiten kann. Es können auch Mischungen aus zwei oder mehreren unterschiedlichen Polyamiden als Komponente B eingesetzt werden. Beispielsweise können Polyamide unterschiedlicher Grundstruktur aber gleicher Endgruppe verwendet werden. Es ist aber auch möglich Polyamide mit gleichem Grundgerüst und Endgruppen einzusetzen, die sich von unterschiedlichen Piperidinverbindungen ableiten.
Des Weiteren ist es möglich, Mischungen aus Polyamiden zu verwenden, die unterschiedliche Gehalte an Endgruppen aufweisen, die sich von den Piperidinverbindungen ableiten.

Unter Polyamiden werden Homopolymere oder Copolymere von synthetischen langkettigen Polyamiden verstanden, die als wesentlichen Bestandteil wiederkehrend AmidGruppen in der Polymer-Hauptkette aufweisen. Beispiele solcher Polyamide sind Nylon 6 (Polycaprolactam), Nylon 6,6 (Polyhexamethylenadipamid), Nylon 4,6 (Polytetramethylenadipamid), Nylon 5,10 (Polypentamethylenadipamid), Nylon 6,10 (Polyhexamethylensebacamid), Nylon 7 (Polyenantholactam), Nylon 11 (Polyundecanolactam), Nylon 12 (Polydodecanolactam). Diese Polyamide tragen bekanntermaßen den generischen Namen Nylon.

Die Herstellung von Polyamiden kann prinzipiell nach zwei Verfahren erfolgen.

Bei der Polymerisation aus Dicarbonsäuren und Diaminen, wie auch bei der Polymerisation aus Aminosäuren reagieren die Amino- und Carboxyl-Endgruppen der Ausgangsmonomere oder Ausgangsoligomere miteinander unter Bildung einer Amid-Gruppe und Wasser. Das Wasser kann anschließend von der Polymermasse entfernt werden. Bei der Polymerisation aus Carbonsäureamiden reagieren die Amino- und Amid-Endgruppen der Ausgansmonomere oder Ausgangsoligomere miteinander unter Bildung einer Amid-Gruppe und Ammoniak. Der Ammoniak kann anschließend von der Polymermasse entfernt werden.

Als Ausgangsmonomere oder Ausgangsoligomere zur Herstellung von Polyamiden eignen sich beispielsweise
(1) C₂- bis C₂₀-, vorzugsweise C₃- bis C₁₈- Aminosäuren, wie 6-Aminocapronsäure, 11-Aminoundecansäure, sowie deren Dimere, Trimere, Tetramere, Pentamere oder Hexamere,
(2) C₂- bis C₂₀- Aminosäureamide, wie 6-Aminocapronsäureamid, 11-Aminoundecansäureamid sowie deren Dimere, Trimere, Tetramere, Pentamere oder Hexamere,
(3) Umsetzungsprodukte von
   (3a) C₂- bis C₂₀-, vorzugsweise C₂- bis C₁₂-Alkylendiaminen, wie Tetramethylendiamin oder vorzugsweise Hexamethylendiamin,
      mit
   (3b) einer C₂- bis C₂₀-, vorzugsweise C₂- bis C₁₄-aliphatischen Dicarbonsäure, wie Sebacinsäure, Decandicarbonsäure oder Adipinsäure,
      sowie deren Dimere, Trimere, Tetramere, Pentamere oder Hexamere,
(4) Umsetzungsprodukte von (3a), mit
   (4b) einer C₈- bis C₂₀-, vorzugsweise C₈- bis C₁₂-aromatischen Dicarbonsäure oder deren Derivate beispielsweise Chloride, wie 2,6-Naphthalindicarbonsäure, vorzugsweise Isopthalsäure oder Terephthalsäure,
   sowie deren Dimere, Trimere, Tetramere, Pentamere oder Hexamere,
(5) Umsetzungsprodukte von (3a), mit
   (5b) einer C₉- bis C₂₀-, vorzugsweise C₉- bis C₁₈-arylaliphatischen Dicarbonsäure oder deren Derivate, beispielsweise Chloride, wie o-, m- oder p-Phenylendiessigsäure,
   sowie deren Dimere, Trimere, Tetramere, Pentamere oder Hexamere,
(6) Umsetzungsprodukte von
   (6a) C₆- bis C₂₀-, vorzugsweise C₆- bis C₁₀-aromatischen Diaminen, wie, m- oder p-Phenylendiamin, mit (3b)
   sowie deren Dimere, Trimere, Tetramere, Pentamere oder Hexamere,
(7) Umsetzungsprodukte von
   (7a), C₇- bis C₂₀-, vorzugsweise C₈- bis C₁₈- arylaliphatischen Diaminen, wie m- oder p-Xylylendiamin, mit (3b)
   sowie deren Dimere, Trimere, Tetramere, Pentamere oder Hexamere,
(8) Monomere oder Oligomere eines C₂- bis C₂₀-, vorzugsweise C₂- bis C₁₈- arylaliphatischen oder vorzugsweise aliphatischen Lactams, wie Enantholactam, Undecanolactam, Dodecanolactam oder Caprolactam,
sowie Homopolymere, Copolymere oder Mischungen solcher Ausgangsmonomere oder Ausgangsoligomere.

Bevorzugt sind dabei solchen Ausgangsmonomere oder Ausgangsoligomere, die bei der Polymerisation zu den Polyamiden Nylon 6, Nylon 6,6, Nylon 4,6, Nylon 5,10, Nylon 6,10, Nylon 7, Nylon 11, Nylon 12, insbesondere zu Nylon 6 und Nylon 66, führen.
Die gegebenenfalls vorhandenen Triacetondiamin (TAD)-Endgruppen leiten sich von 4-Amino-2,2, 6, 6-Tetramethylpiperidin ab. Das TAD kann über eine Amino- oder Carboxylgruppe an das Polyamid angebunden sein. Es kann sich so auch beispielsweise um 4-Carboxy-2,2,6,6-Tetramethylpiperidin handeln.
Die Herstellung der Polyamide B ist an sich bekannt oder kann nach an sich bekannten Verfahren erfolgen. So kann die Polymerisation bzw. Polykondensatior der Ausgangsmonomere, beispielsweise in Gegenwart der Piperidin-Verbindungen, unter üblichen Verfahrensbedingungen vorgenommen werden, wobei die Umsetzung kontinuierlich oder diskontinuierlich erfolgen kann.
Die Piperidin-Verbindungen können - sofern vorhanden - aber auch mit einem Kettenregler, wie er üblicherweise für die Herstellung von Polyamiden eingesetzt wird, kombiniert werden. Angaben zu geeigneten Verfahren finden sich z. B. in WO 1995/28443, WO 1999/41297 oder DE-A 198 12 135. Die TAD-Verbindung wird durch Reaktion mindestens einer der arnidbildenden Gruppen R⁷ an das Polyamid gebunden. Die sekundären Aminogruppen der Piperidin-Ringsysteme reagieren dabei wegen sterischer Hinderung nicht.

Es ist auch möglich, Polyamide zu verwenden, die durch Copolykondensation von zwei oder mehr der oben genannten Monomeren oder ihrer Komponenten hergestellt worden sind, z. B. Copolymere aus Adipinsäure, Isophthalsäure oder Terephthalsäure und Hexamethylendiamin oder Copolymere aus Caprolactam, Terephthalsäure und Hexamethylendiamin. Derartige teilaromatische Copolyamide enthalten 40 bis 90 Gew.-% Einheiten, die sich von Terephthalsäure und Hexamethylendiamin ableiten. Ein geringer Anteil der Terephthalsäure, vorzugsweise nicht mehr als 10 Gew.-%, der gesamten eingesetzten aromatischen Dicarbonsäuren können durch Isophthalsäure oder andere aromatische Dicarbonsäuren, vorzugsweise solche, in denen die Carboxylgruppen in para-Stellung stehen, ersetzt werden.

Ein teilaromatisches Polyamid ist Nylon 9T, das sich von Nonandiamin und Terephthalsäure ableitet.

Als Monomere kommen auch cyclische Diamine wie die der allgemeinen Formel (V) 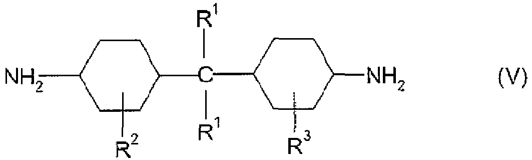 in der
R¹ Wasserstoff oder eine C₁ - C₄-Alkylgruppe,
R² eine C₁ - C₄-Alkylgruppe oder Wasserstoff und
R³ eine C₁ - C₄-Alkylgruppe oder Wasserstoff bedeutet, in Betracht.

Besonders bevorzugte Diamine V sind Bis(4-aminocyclohexyl)methan, Bis(4-amino-3-methylcyclohexyl)methan, Bis(4-aminocyclohexyl)-2,2-propan oder Bis(4-amino-3-methylcyclohexyl)-2,2-propan.

Als weitere Diamine V seien 1,3- oder 1,4-Cyclohexandiamin oder Isophorondiamin genannt. Neben den Einheiten, die sich von Terephthalsäure und Hexamethylendiamin ableiten, enthalten die teilaromatischen Copolyamide Einheiten, die sich von ε-Caprolactam ableiten und/oder Einheiten, die sich von Adipinsäure und Hexamethylendiamin ableiten.

Der Anteil an Einheiten, die sich von ε-Caprolactam ableiten, beträgt bis zu 50 Gew.-%, vorzugsweise 20 bis 50 Gew.-%, insbesondere 25 bis 40 Gew.-%, während der Anteil an Einheiten, die sich von Adipinsäure und Hexamethylendiamin ableiten, bis zu 60 Gew.-%, vorzugsweise 30 bis 60 Gew.-% und insbesondere 35 bis 55 Gew.-% beträgt.

Die Copolyamide können auch sowohl Einheiten von ε-Caprolactam als auch Einheiten von Adipinsäure und Hexamethylendiamin enthalten; in diesem Fall ist darauf zu achten, dass der Anteil an Einheiten, die frei von aromatischen Gruppen sind, mindestens 10 Gew.-% beträgt, vorzugsweise mindestens 20 Gew.-%. Das Verhältnis der Einheiten, die sich von ε-Caprolactam und von Adipinsäure und Hexamethylendiamin ableiten, unterliegt dabei keiner besonderen Beschränkung.

Als besonders vorteilhaft für viele Anwendungszwecke haben sich Polyamide mit 50 bis 80, insbesondere 60 bis 75 Gew.-% Einheiten, die sich von Terephthalsäure und Hexamethylendiamin ableiten und 20 bis 50, vorzugsweise 25 bis 40 Gew.-% Einheiten, die sich von ε-Caprolactam ableiten, erwiesen.

Die Herstellung der teilaromatischen Copolyamide kann z. B. nach dem in den EP-A-129 195 und EP-A-129 196 beschriebenen Verfahren erfolgen.

Bevorzugte teilaromatische Polyamide sind solche, die einen Gehalt an Triamineinheiten, insbesondere Einheiten des Dihexamethylentriamins von unter 0,555 Gew.-% aufweisen. Besonders bevorzugt werden solche teilaromatischen Polyamide mit Triamingehalten von 0,3 Gew.-% oder weniger.

Bevorzugt werden lineare Polyamide mit einem Schmelzpunkt über 200 °C.

Bevorzugte Polyamide sind Polyhexamethylenadipinsäureamid, Polyhexamethylensebacinsäureamid und Polycaprolactam sowie Polyamid 6/6T und Polyamid 66/6T sowie Polyamide, die cyclische Diamine als Comonomere enthalten. Die Polyamide weisen im Allgemeinen eine relative Viskosität von 2,0 bis 5 auf, bestimmt an einer 1 Gew.-%igen Lösung in 96%iger Schwefelsäure bei 23 °C, was einem Molekurlargewicht (Zahlenmittel) von etwa 15.000 bis 45.000 entspricht.

Polyamide mit einer relativen Viskosität von 2,4 bis 3,5, insbesondere 2,5 bis 3,4, werden bevorzugt verwendet.

Außerdem seien noch Polyamide erwähnt, die z. B. durch Kondensation von 1,4-Diaminobutan mit Adipinsäure unter erhöhter Temperatur erhältlich sind (Polyamid 4,6). Herstellungsverfahren für Polyamide dieser Struktur sind z. B. in den EP-A 038 094, EP-A 038 582 und EP-A 039 524 beschrieben.

### Zur Komponente C

Als Komponente C enthalten die thermoplastischen Formmassen 5 bis 50 Gew.% mindestens zweier verschiedener Pfropfkautschuke ohne olefinische Doppelbindungen (C1 und C2), wobei sich diese Pfropfkautschuke C1 und C2 (zumindest) bezüglich des Aufbaus der Pfropfhülle unterscheiden. Die Komponente C ist in den erfindungsgemäßen Formmassen häufig in einer Menge von 14 bis 35, vorzugsweise 14 bis 32 Gew.-% enthalten. Sie ist vorzugsweise halogenfrei.

Unter Pfropfkautschuken im Sinne der Erfindung werden Kern-Schale-Kautschuke verstanden, die auch mehrschalig aufgebaut sein können. Bevorzugt werden Pfropfkautschuke als Komponenten C1 und C2, die als Kern (Pfropfgrundlage) eine Komponente mit einer Tg von weniger als -20°C, vorzugsweise weniger als -40°C aufweisen. Geeignet sind als C1 und C2 insbesondere Kautschuke auf Acrylat-, Siloxan- und EPDM-Basis. Die Pfropfhülle besteht vorzugsweise aus Styrol und Acrylnitril und/oder anderen copolymerisierbaren Monomeren. Das Verhältnis von Hart- zu Weichphase liegt bei den Pfropfkautschuken C1 und C2 zwischen 10 zu 90 und 70 zu 30 Gewichtsteilen. Die Herstellung dieser Pfropfkautschuke kann wie in WO 2001/42362 beschrieben erfolgen. Die Pfropfhülle (Pfropfauflage) der einen Pfropfkautschuk-Komponente besteht häufig aus Styrol/Acrylnitril, die Pfropfhülle des zweiten Pfropfkautschuks enthält vorzugsweise Glycidylmethacrylat.

Die ersten Pfropfkautschuke C1 sind häufig aufgebaut aus:
1) 40 bis 80 Gew.-%, vorzugsweise 50 bis 70 Gew.-% einer Pfropfgrundlage aus einem kautschukelastischen Polymeren auf der Basis von Alkylacrylaten mit 1 bis 8 C-Atomen im Alkylrest, Ethylen/Propylen, Dienen oder Siloxanen und mit einer Glasübergangstemperatur von unter 0 °C,
2) 20 bis 60 Gew.-%, vorzugsweise 30 bis 50 Gew.-% einer Pfropfauflage aus:
   21) 60 bis 95 Gew.-%, bevorzugt 70 bis 85 Gew.-% Styrol oder substituierten Styrolen der allgemeinen Formel 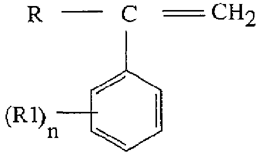 worin R ein C₁- bis C₈ Alkylrest, bevorzugt Methyl oder Ethyl oder Wasserstoff bedeutet und R¹ einen C₁- bis C₈- Alkylrest, bevorzugt Methyl oder Ethyl, darstellt und n den Wert 1, 2 oder 3 hat, oder deren Mischungen und
   22) 5 bis 40 Gew.-%, vorzugsweise 15 bis 30 Gew.-% mindestens eines ungesättigten Nitrils, bevorzugt Acrylnitril oder Methacrylnitril oder deren Mischungen.

Für die Pfropfgrundlage kommen Polymere in Betracht, deren Glasübergangstemperatur unterhalb von -20 °C liegen. Dies sind z.B. Elastomere auf der Basis von C₁- bis C₈-Alkylestern der Acrylsäure, die gegebenenfalls weitere Comonomere enthalten können, auf der Basis von Ethylen/Propylen, auf der Basis von Dienen wie Butadien oder auf der Basis von Siloxanen, Als Pfropfkautschuk ergeben sich dann ASA-, AES-, ABS- bzw. Polysiloxan-Kautschuke.

Bevorzugt sind Pfropfgrundlagen, die aufgebaut sind aus:
11) 70 bis 99,9 Gew.-%, vorzugsweise von 69 bis 79 Gew.-% mindestens eines Alkylacrylates mit 1 bis 8 C-Atomen im Alkylrest, vorzugsweise n-Butylacrylat und/oder 2-Ethyl-hexylacrylat, insbesondere n-Butylacrylat als alleiniges Alkylacrylat
12) 0 bis 30 Gew.-%, insbesondere 20 bis 30 Gew.-% eines weiteren copolymerisierbaren monoethylenisch ungesättigten Monomeren, wie Butadien, Isopren, Styrol, Acrylnitril, Methylmethacrylat oder Vinylmethylether oder deren Mischungen
13) 0,1 bis 5 Gew.-%, vorzugsweise 1 bis 4 Gew.-% eines copolymerisierbaren, polyfunktionellen, vorzugsweise bi- oder tri-funktionellen, die Vernetzung bewirkenden Monomeren, wobei die Summe von den Komponenten 100 Gew.-% ergibt.

Als solche bi- oder polyfunktionellen Vernetzungsmonomeren eignen sich Monomere, die vorzugsweise zwei, gegebenenfalls auch drei oder mehr, zur Copolymerisation befähigte ethylenische Doppelbindungen enthalten, die nicht in den 1,3-Stellungen konjugiert sind. Geeignete Vernetzungsmonomere sind beispielsweise Divinylbenzol, Diallylmaleat, Diallylfumarat, Diallylphthalat, Triallylcyanurat oder Triallylisocyanurat. Als besonders günstiges Vernetzungsmonomeres hat sich der Acrylsäureester des Tricyclodecenylalkohols erwiesen (vgl. DE-A 12 60 135). Diese Art von Pfropfgrundlagen ist aus DE-A 31 49 358 bekannt.

Von den Pfropfauflagen des ersten Pfropfkautschuks sind diejenigen bevorzugt, in denen Styrol (oder α-Methylstyrol oder deren Mischungen) einerseits und Acrylnitril (oder Methacrylnitril) andererseits vorhanden sind. Als bevorzugte Monomeren-Gemische werden vor allem Styrol und Acrylnitril oder α-Methylstyrol und Acrylnitril eingesetzt. Die Pfropfauflagen sind erhältlich durch Copolymerisation der Komponenten.

Als Pfropfgrundlage werden auch ASA-Kautschuk bevorzugt. Ihre Herstellung ist an sich bekannt aus DE-A 28 26 925, DE-A 31 49 358 und DE-A 34 14 118. Die Herstellung der Propfpolymere kann beispielsweise nach der in der DE-A 12 60 135 beschriebenen Methode erfolgen.

Die Bedingungen der Pfropfpolymerisation werden vorzugsweise so gewählt, dass Teilchengrößen von 50 bis 800 nm (d₅₀-Wert der integralen Massenverteilung) resultieren. Maßnahmen hierzu sind bekannt und z. B in der DE-A 28 26 925 beschrieben. Durch ein Saatlatex-Verfahren kann direkt eine grobteilige Kautschukdispersion hergestellt werden. Um möglichst zähe Produkte zu erzielen, ist es häufig von Vorteil, eine Mischung mindestens zweier Pfropfpolymerisate mit unterschiedlichen Teilchengrößen zu verwenden. Um dies zu erreichen, werden die Teilchen des Kautschuks z. B. in bekannter Weise, z.B. durch Agglomeration, so vergrößert, dass der Latex bimodal (50 bis 180 nm und 200 bis 800 nm) aufgebaut ist.

Bei der Polymerisation der Hartphase entstehen auch untergeordnete Mengen nichtgepfropfter Anteile. Diese werden im allgemeinen der Hartphase zugerechnet.

Es werden häufig auch Mischungen verschiedener Kautschuke C1 verwendet werden. Das Mischungsverhältnis der zwei verschiedenen Kautschuke soll z.B. 10 zu 90 bis 90 zu 10 betragen, wobei sich die Kautschuke z.B. bezüglich der Partikelgröße unterscheiden können.

### Komponente C2

Als Komponente C2 sollen ebenfalls Kern-Schale-Pfropfkautschuke verwendet werden, die jedoch im Gegensatz zur Komponente C gekennzeichnet sind durch:
- eine oder mehrere Pfropfhüllen auf Basis von Acrylaten oder Methacrylate und
- einen Anteil von 0,1 bis 2, vorzugsweise 0,15 bis 1,5 Gew.-% eines Epoxidgruppenhaltigen Monomeren in der äußeren Pfropfhülle.

Als Epoxidgruppenhaltiges Monomer wird Glycidylmethacrylat bevorzugt.

Bezogen auf die Komponenten C1 und C2 beträgt der Anteil von C2 in der Regel mindestens 20, vorzugsweise 25 Gew.-%.

### Zur Komponente D

Als Komponente D enthalten die erfindungsgemäßen Formmassen 1 bis 25 Gew.-% (oftmals 2 bis 10 Gew.-%) Terpolymer auf Basis Styrol, Acrylnitril und Maleinsäureanhydrid. Als Komponente D enthalten die thermoplastischen Formmassen bevorzugt ein Styrol-Acrylnitril-Maleinsäureanhydrid-Terpolymer und optional ein Styrol-N-Phenylmaleinimid-Maleinsäureanhydrid-Terpolymer.

Im Terpolymer beträgt der Anteil an Acrylnitril, bezogen auf das gesamte Terpolymer, vorzugsweise 10 bis 30 Gew.-%, besonders bevorzugt 15 bis 30 Gew.-%, insbesondere 20 bis 25 Gew.-%. Die Copolymere haben im allgemeinen Molekulargewichte M_{w} im Bereich von 30.000 bis 500.000 g/mol vorzugsweise von 50.000 bis 250.000 g/mol, insbesondere von 70.000 bis 200.000 g/mol, bestimmt durch GPC unter Verwendung von Tetrahydrofuran (THF) als Eluent und mit Polystyrol-Kalibrierung.

Die Copolymeren können durch radikalische Polymerisation der entsprechenden Monomere hergestellt werden. Die Herstellung ist beispielsweise in WO 2005/040281. Seite 10, Zeile 31 bis Seite 11, Zeile 8, näher erläutert. Ferner können auch Styrol-N-Phenylmaleinimid-Maleinsäureanhydrid-Terpolymere eingesetzt werden. Es kann ferner auf die Beschreibungen in EP-A-0 784 080 sowie DE-A-100 24 935 verwiesen werden, wie auch auf DE-A-44 07 485, Beschreibung der dortigen Komponente B auf den Seiten 6 und 7.

### Zur Komponente E

Als Komponente E enthalten die erfindungsgemäßen thermoplastischen Formmassen 2 bis 30 Gew.-% mindestens eines weiteren Kautschuks auf Basis olefinischer Bausteine, wobei diese Kautschuke dadurch gekennzeichnet sind, dass sie
a) keinen Kern-Schale-Aufbau aufweisen
b) mindestens 0,05 Gew.% einer funktionellen Gruppe aufweisen.

Dies Komponente E ist z. B. ein Kautschuk basierend auf olefinischen Monomeren ohne Kern-Schale-Aufbau und weist mindestens 0,05 Gew.-% funktioneller Monomere auf. Der Ausdruck "auf Basis" bedeutet, dass der größte Anteil des Kautschuks sich von olefinischen Monomeren ableitet (mindestens 60 Gew.-%, vorzugsweise mindestens 80 Gew.-%, insbesondere mindestens 90 Gew.-%). Der Kautschuk weist oftmals mindestens 0,1 Gew.-% funktionelle Monomere auf. Hierbei handelt es sich um Monomere, die eine funktionelle Gruppe enthalten, die insbesondere zur Ausbildung von Bindungen mit dem Polyamid der Komponente B befähigt sind. Dabei werden vorzugsweise kovalente Bindungen ausgebildet. Bevorzugt sind in den funktionellen Monomeren die darin enthaltenen funktionellen Gruppen, ausgewählt aus Carbonsäure-, Carbonsäureanhydrid-, Carbonsäureester-, Carbonsäureamid-, Carbonsäureimid-, Amino-, Hydroxyl-, Epoxid-, Urethan- oder Oxazolingruppen oder deren Mischungen.

Bevorzugt ist Komponente E ein Copolymerisat aus:
e1) 35 bis 89,95 Gew.-% Ethylen als Komponente E1,
e2) 10 bis 60 Gew.-% 1-Octen, 1-Buten, Propen oder Mischungen davon als Komponente E2 und
e3) 0,05 bis 5 Gew.-% funktioneller Monomere, wobei die Monomere funktionelle Gruppen tragen, ausgewählt aus Carbonsäure-, Carbonsäureanhydrid, Carbonsäureester-, Carbonsäureamid-, Carbonsäureimid-, Amino-, Hydroxyl-, Epoxid-, Urethan- oder Oxazolingruppen oder Mischungen davon als Komponente E3.

Der Anteil der funktionellen Gruppen E3 beträgt dabei 0,1 bis 5, vorzugsweise 0,2 bis 4 und insbesondere 0,3 bis 3,5 Gew.-%. bezogen auf das Gesamtgewicht der Komponente E. Besonders bevorzugte Komponenten E3 sind aus einer ethylenisch ungesättigten Mono- oder Dicarbonsäure oder einem funktionellen Derivat einer solchen Säure aufgebaut.

Grundsätzlich eignen sich alle primären, sekundären und tertiären C₁-C₁₈-Alkylester der Acrylsäure oder Methacrylsäure, doch werden Ester mit 1 - 12 C-Atomen, insbesondere mit 2 - 10 C-Atomen bevorzugt. Beispiele hierfür sind Methyl-, Ethyl-, Propyl-, n-, i-Butyl- und t-Butyl-, 2-Ethylhexyl-, Octyl- und Decylacrylate bzw. die entsprechenden Ester der Methacrylsäure. Von diesen werden n-Butylacrylat und 2-Ethylhexylacrylat besonders bevorzugt.

Anstelle der Ester oder zusätzlich zu diesen können in den Olefinpolymerisaten auch säurefunktionelle und/oder latent säurefunktionelle Monomere ethylenisch ungesättigter Mono- oder Dicarbonsäuren oder Epoxygruppen aufweisende Monomere enthalten sein.

Als weitere Beispiele für Monomere E3 seien Acrylsäure, Methacrylsäure, tertiäre Alkylester dieser Säuren, insbesondere tert.-Butylacrylat und Dicarbonsäuren wie Maleinsäure und Fumarsäure oder Derivate dieser Säuren sowie deren Monoester genannt.

Die säurefunktionellen bzw. latent säurefunktionellen Monomeren und die Epoxygruppen-enthaltenden Monomeren werden vorzugsweise durch radikalische Pfropfreaktion an der Polyolefin-Kette fixiert, beispielsweise durch Zugabe von Verbindungen der nachfolgenden allgemeinen Formeln (I), (II), (III) und/oder (IV). 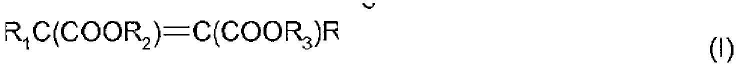 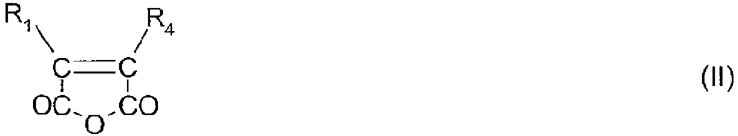 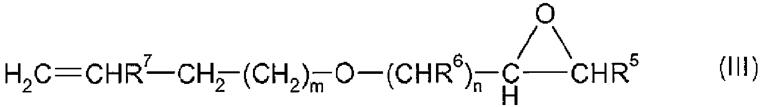 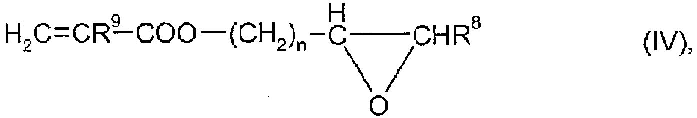 wobei die Reste R₁-R₄, R⁵-R⁹ Wasserstoff oder Alkylgruppen mit 1 bis 6 C-Atomen darstellen und m eine ganze Zahl von 0 bis 20 und n eine ganze Zahl von 0 bis 10 ist. Bevorzugt für R₁-R₄, R⁵-R⁷ ist Wasserstoff, für m der Wert 0 oder 1 und für n der Wert 1.

Die entsprechenden Verbindungen sind z. B. Maleinsäure, Fumarsäure, Maleinsäureanhydrid, Alkenylglycidylether und Vinylglycidylether. Bevorzugte Verbindungen der Formeln I, II, III und IV sind Maleinsäure und Maleinsäureanhydrid als Komponente E3 und Epoxygruppen-enthaltende Ester der Acrylsäure und/oder Methacrylsäure, wobei Glycidylacrylat und Glycidylmethacrylat (als Komponente E3) besonders bevorzugt werden.

Besonders bevorzugt sind Olefinpolymerisate aus

| | |
|---|---|
| 50 bis 89,8 | Gew.-% Ethylen, vorzugsweise 55 bis 85,7, |
| 10 bis 50 | Gew.-% 1-Buten, vorzugsweise 14 bis 44, |
| 0,2 bis 2 | Gew.-% Acrylsäure oder Maleinsäure oder Maleinsäureanhydrid, bevorzugt von 0,3 bis 1 Gew.-%, |

oder

| | |
|---|---|
| 40 bis 69,9 | Gew.-% Ethylen, vorzugsweise 50 bis 64,9, |
| 30 bis 60 | Gew.-% 1-Octen, vorzugsweise 35 bis 49, |
| 0,05 bis 2 | Gew.-% Acrylsäure oder Maleinsäure oder Maleinsäureanhydrid, bevorzugt von 0,1 bis 1 Gew.-%. |

Die Herstellung der vorstehend beschriebenen Ethylencopolymeren kann nach an sich bekannten Verfahren erfolgen, vorzugsweise durch statistische Copolymerisation unter hohem Druck und erhöhter Temperatur. Das Molekulargewicht dieser Ethylen-α-Olefin-Copolymere liegt zwischen 10.000 und 500.000 g/mol, bevorzugt zwischen 15.000 und 400.000 g/mol (Mn, bestimmt mittels GPC in 1,2,4-Trichlorbenzol mit PS-Eichung).

In einer besonderen Ausführungsform werden mittels sog. "single site catalysts" hergestellte Ethylen-α-Olefin-Copolymere eingesetzt. Weitere Einzelheiten können der US 5,272,236 entnommen werden. In diesem Fall weisen die Ethylen-α-Olefin-Copolymere eine für Polyolefine enge Molekulargewichtsverteilung kleiner 4, vorzugsweise kleiner 3,5 auf. Bevorzugt eingesetzte Handelsprodukte E sind Exxelor^{®} VA 1801 oder 1803, Kraton^{®} G 1901 FX oder Fusabond^{®} N NM493 D der Firmen Exxon, Kraton und Du-Pont sowie Tafmer^{®}MH 7010 der Firma Mitsui sowie Lupolen^{®} KR 1270 der BASF. Es können auch Mischungen der vorstehend aufgeführten Kautschuktypen eingesetzt werden.

Die funktionalisierten Kautschuke der Komponente E reagieren in der Schmelze mit der Komponente B und werden darin fein dispergiert. Besonders bevorzugt sind EP-Kautschuke mit Acrylsäure oder Maleinsäureanhydrid gepfropft, Ethylen-Acrylsäure-Copolymere, Ethylen-Octen-Copolymere mit Maleinsäureanhydrid gepfropft, SEBS-Kautschuke, welche mit Maleinsäureanhydrid gepfropft sind, sowie Ethylen-Buten-Copolymere, die mit Maleinsäureanhydrid oder Acrylsäure gepfropft sind.

### Zur Komponente F

Als Komponente F können die erfindungsgemäßen thermoplastischen Formmassen einen oder mehrere faser- oder teilchenförmige Füllstoffe bzw. Verstärkungsstoffe enthalten. Die Menge beträgt 0 bis 50 Gew.-%, oftmals von 0 bis 30 Gew.% an Komponente F. Bevorzugte faserförmige Füll- oder Verstärkungsstoffe sind Kohlenstofffasern, Kaliumtitanat-whisker, Aramid-Fasern und besonders bevorzugt Glasfasern. Bei der Verwendung von Glasfasern können diese zur besseren Verträglichkeit mit dem Matrixmaterial mit Schlichte und einem Haftvermittler ausgerüstet sein.

Im Allgemeinen haben die verwendeten Kohlenstoff- und Glasfasern einen Durchmesser im Bereich von 6 - 20 µm. Die Einarbeitung der Glasfasern kann sowohl in Form von Kurzglasfasern als auch in Form von Endlossträngen (Rovings) erfolgen. Im fertigen Spritzgussteil liegt die mittlere Länge der Glasfasern vorzugsweise im Bereich von 0,08 - 0,5 mm. Kohlenstoff- oder Glasfasern können auch in Form von Geweben, Matten oder Glasseidenrovings eingesetzt werden.

Als teilchenförmige Füllstoffe eignen sich amorphe Kieselsäure, Magnesiumcarbonat (Kreide), gepulverter Quarz, Glimmer, Talcum, Feldspat, Glaskugeln und insbesondere Calciumsilicate wie Wollastonit und Kaolin (insbesondere kalzinierter Kaolin).

Besonders bevorzugte Kombinationen von Füllstoffen sind solche aus Glasfasern und Wollastonit.

### Zur Komponente G

Als weitere Komponente G kann die Formmasse weitere Zusätze enthalten, beispielsweise in einer Menge von 0 bis 40 Gew.-%, oftmals 0 bis 20 Gew.%. Beispiele hierfür sind Flammschutzmittel, Farbstoffe, Pigmente oder Stabilisatoren, beispielsweise Thermostabilisatoren oder UV-Stabilisatoren, sowie Gleitmittel oder Entformungshilfen. Thermostabilisatoren und UV-Stabilisatoren sind oftmals besonders wichtig.

Die erfindungsgemäßen Formmassen enthalten vorzugsweise weniger als 0,1 Gew.-% Phthalsäureanhydrid. Besonders bevorzugt enthalten die Formmassen jedoch kein Phthalsäureanhydrid.

Die Erfindung betrifft auch ein Verfahren zur Herstellung der vorstehend beschriebenen thermoplastischen Formmassen, bei denen man die Komponenten A bis E und gegebenenfalls F und G in beliebiger Reihenfolge miteinander vermischt.

Die erfindungsgemäßen Formmassen können nach an sich bekannten Verfahren, beispielsweise Extrusion, hergestellt werden. Die erfindungsgemäßen Formmassen können z.B. hergestellt werden, indem man die Ausgangskomponenten in üblichen Mischvorrichtungen wie Schneckenextrudern vorzugsweise Zweischneckenextrudern, Brabender-Mischer oder Banburry-Mischer sowie Knetern mischt und anschließend extrudiert. Nach der Extrusion wird das Extrudat abgekühlt und zerkleinert. Die Reihenfolge der Mischung der Komponenten kann variiert werden, so können zwei oder ggf. drei Komponenten vorgemischt werden, es können aber auch alle Komponenten gemeinsam gemischt werden.

Um eine möglichst homogene Durchmischung zu erhalten, ist eine intensive Durchmischung vorteilhaft. Dazu sind im allgemeinen mittlere Mischzeiten von 0,2 bis 30 Minuten bei Temperaturen von 240 bis 300°C, bevorzugt 245 bis 290°C, erforderlich. Nach der Extrusion wird das Extrudat in der Regel abgekühlt und zerkleinert.

Die erfindungsgemäßen Formmassen zeichnen sich durch verbesserte Witterungsbeständigkeit, sehr gute Kerbschlagzähigkeit bei -30°C und durch geringe Neigung zur Bildung von Oberflächendefekten aus. Überraschenderweise weisen die erfindungsgemäßen Formmassen auch geringeres Emissionsverhalten auf.

Die nachfolgenden Beispiele und Ansprüche erläutern die Erfindung.

Die Viskositätszahl der Polyamide wird nach DIN 53 727 an 0,5 Gew.%-igen Lösungen in 96 Gew.-% Schwefelsäure ermittelt. Die Viskositätszahl der Styrolco- oder Terpolymere wird in 0,5 Gew.-%-iger DMF-Lösung bei 25°C bestimmt.

### Zur Prüfung der Formmassen

Die Wärmeformbeständigkeit der Proben wurde mittels der Vicat-Erweichungstemperatur ermittelt. Die Vicat-Erweichungstemperatur wurde nach DIN 53 460, mit einer Kraft von 49,05 N und einer Temperatursteigerung von 50 K je Stunde, an ISO-Stäben ermittelt. Die Kerbschlagzähigkeit der Produkte wurde an ISO-Stäben nach ISO 179 1 eA bestimmt (bei -30°C und RT).

Die Fließfähigkeit wurde nach ISO 1133 bei 240°C und 5 kg Belastung bestimmt. Die Schädigungsarbeit wurde nach ISO 6603 an Platten (60x60x3 mm3) bei -30°C ermittelt. Dabei wurde die Gesamtarbeit Wt verwendet. Die Platten wurden bei einer Massetemperatur von 250°C und einer Werkzeugtemperatur von 60°C gefertigt.

Die Qualität der Oberfläche wurde an Platten der Größe 330mm*120mm*2mm beurteilt, welche bei einer Massetemperatur von 250°C und einer Werkzeugtemperatur 60°C hergestellt wurden. Die Beurteilung der Oberfläche erfolgte nach dem Schulnotensystem (1: keine Tigerlines; 6: sehr viele Tigerlines). Das Emissionsverhalten wurde als Gesamt C-Emission nach VDA 277 bestimmt.

### Eingesetzte Komponente A

Styrol-Acrylnitril-Copolymer mit 75 Gew.-% Styrol und 25 Gew.-% Acrylnitril und einer Viskositätszahl von 80 ml/g (bestimmt in 0,5 Gew.-%-iger DMF-Lösung bei 25°C).

### Eingesetzte Komponente B1

Als Polyamid B 1 wurde ein Polyamid 6, erhalten aus ε-Caprolactam, mit einer Viskositätszahl von 150 ml/g (gemessen 0,5 gew.-%-ig in 96 %iger Schwefelsäure) verwendet, z.B. Ultramid^{®} B 3.

### Eingesetzte Komponente B2

Als Polyamid B 2 wurde ein Polyamid 6, erhalten aus ε-Caprolactam, mit einer Viskositätszahl von 130 ml/g (gemessen 0,5 gew.-%-ig in 96 %iger Schwefelsäure) und einem Anteil von Triacetondiamin von 0,16 Gew.% verwendet.

### Eingesetzte Komponente C11

Pfropfkautschuk (feinteilig), hergestellt aus:
ß1) 16 g Butylacrylat und 0,4 g Tricyclodecenylacrylat, die in 150 g Wasser unter Zusatz von 1 g des Natriumsalzes einer C₁₂-C₁₈-Paraffinsulfonsäure, 0,3 g Kaliumpersulfat, 0,3 g Natriumhydrogencarbonat und 0,15 g Natriumpyrophosphat unter Rühren auf 60°C erwärmt wurden. 10 Minuten nach dem Anspringen der Polymerisationsreaktion wurde innerhalb von 3 Stunden eine Mischung aus 82 g Butylacrylat und 1,6 g Tricyclodecenylacrylat zugegeben. Nach Beendigung der Monomerzugabe wurde noch eine Stunde gerührt. Der erhaltene Latex des vernetzten Butylacrylat-Polymerisats hatte einen Feststoffgehalt von 40 Gew.-%, die mittlere Teilchengröße (Gewichtsmittel) wurde zu 76 nm ermittelt, und die Teilchengrößenverteilung war eng (Quotient Q = 0,29).
ß2) 150 g des nach ß1) erhaltenen Polybutylacrylat-Latex wurden mit 40 g einer Mischung aus Styrol und Acrylnitril (Gewichtsverhältnis 75 : 25) und 60 g Wasser gemischt und unter Rühren nach Zusatz von weiteren 0,03 g Kaliumpersulfat und 0,05 g Lauroylperoxid 4 Stunden auf 65°C erhitzt. Nach Beendigung der Pfropfmischpolymerisation wurde das Polymerisationsprodukt mittels Calciumchloridlösung bei 95°C aus der Dispersion gefällt, mit Wasser gewaschen und im warmen Luftstrom getrocknet. Der Pfropfgrad des Pfropfmischpolymerisats betrug 35 %, die Teilchengröße beträgt 91 nm.

### Eingesetzte Komponente C12

Pfropfpolymer (grobteilig), das folgendermaßen hergestellt wurde:
ß3) Zu einer Vorlage aus 1,5 g des nach ß1 hergestellten Latex wurden nach Zugabe von 50 g Wasser und 0,1 g Kaliumpersulfat im Verlauf von 3 Stunden einerseits eine Mischung aus 49 g Butylacrylat und 1 g Tricyclodecenylacrylat und andererseits eine Lösung von 0,5 g des Natriumsalzes einer C₁₂-C₁₈-Paraffinsulfonsäure in 25 g Wasser bei 60°C zugegeben. Anschließend wurde 2 Stunden nachpolymerisiert. Der erhaltene Latex des vernetzten Butylacrylat-Polymerisats hatte einen Feststoffgehalt von 40 %. Die mittlere Teilchengröße (Gewichtsmittel) des Latex wurde zu 430 nm ermittelt, die Teilchengrößenverteilung war eng (Q = 0,1).
ß4) 150 g des nach ß3 hergestellten Latex wurden mit 20 g Styrol und 60 g Wasser gemischt und unter Rühren nach Zusatz von weiteren 0,03 g Kaliumpersulfat und 0,05 g Lauroylperoxid 3 Stunden auf 65°C erhitzt. Die bei dieser Pfropfmischpolymerisation erhaltene Dispersion wurde dann mit 20 g eines Gemisches aus Styrol und Acrylnitril im Gewichtsverhältnis 75 : 25 weitere 4 Stunden polymerisiert. Das Reaktionsprodukt wurde dann mittels einer Calciumchloridlösung bei 95°C aus der Dispersion ausgefällt, abgetrennt, mit Wasser gewaschen und im warmen Luftstrom getrocknet. Der Pfropfgrad des Pfropfmischpolymerisats wurde zu 35 % ermittelt; die mittlere Teilchengröße der Latexteilchen betrug 510 nm.

### Eingesetzte Komponente C2

Kern-Schale-Pfropfkautschuk, bestehend aus einem Kern aus vernetztem n-Butyacryiat und einer Schale bestehend aus Methylmethacrylat und Glycidylmethacrylat, wobei das Gewichtsverhältnis von Kern zur Schale 70 zu 30 beträgt und der Anteil an Glycidylmethacrylat an der Hülle 0,5 Gew.-% beträgt.

### Eingesetzte Komponente D

Als Komponente D wurde ein Styrol-Acrylnitril-Maleinsäureanhydrid-Terpolymer verwendet, welches eine Zusammensetzung von 74,4/23,5/2,1 (Gew.-%) hatte, Viskositätszahl: 66 ml/g

### Eingesetzte Komponente E

Ethylen-1-Buten-Copolymer mit 67,9% Ethylen, 31,6 Gew.-% Buten und 0,5 Gew.% Maleinsäure funktionalisiert; beispielsweise Tafmer® MH 7010 (von Mitsui, Japan).

### Eingesetzte Komponente E*

Compound aus 80 Teilen Komponente B1 und 20 Teilen E, hergestellt durch Schmelze-Kompoundierung auf einer Vorrichtung ZSK 30 bei 250°C, 10 kg/h Durchsatz und 250 min⁻¹ Drehzahl.

### Zur Herstellung der erfindungsgemäßen Formmassen

Die Komponenten wurden in einem Zweiwellenextruder bei einer Massetemperatur von 240°C bis 260°C gemischt. Die Schmelze wurde durch ein Wasserbad geleitet und granuliert. Die Ergebnisse der Prüfungen sind in Tabelle 1 aufgeführt.

**Tabelle 1:**

| Formmasse | V1 | V2 | V3 | V4 | 5 | 6 | 7 | 8 |
|---|---|---|---|---|---|---|---|---|
| A | 19 | 19 | 19 | 14 | 19 | 19 | 14 | 14 |
| B1 | 41 | 41 | - | - | 41 | | - | - |
| B2 | - | - | 41 | 41 | | 41 | 41 | 41 |
| C11 | - | 31 | 31 | 24 | 21 | 21 | 14 | - |
| C12 | 31 | - | - | - | - | - | - | 14 |
| C2 | - | - | - | - | 10 | 10 | 10 | 10 |
| D1 | - | - | - | 5 | 5 | 5 | - | - |
| E | - | 4 | - | - | 4 | 4 | - | - |
| E* | - | - | - | 16 | - | - | 16 | 16 |
| Vicat B [°C] | 103 | 103 | 102 | 115 | 102 | 102 | 115 | 115 |
| MVI [mol/10'] | 28,6 | 26,9 | 48,7 | 69,4 | 25,6 | 47,6 | 68,7 | 70,2 |
| ak, RT [kJ/m²] | 34,1 | 43,5 | 51,1 | 66,2 | 56,1 | 68,2 | 67,5 | 61,6 |
| ak, -30°C [kJ/m²] | 7,6 | 7,3 | 6,9 | 8,9 | 11,3 | 12,3 | 13,1 | 12,4 |
| Wt,-30°C [Nm] | 56,1 | 46,2 | 49,2 | 66,1 | 66,1 | 69,5 | 65,2 | 67,1 |
| TigerLines | 2 | 2 | 1,5 | 1,5 | 2 | 1,5 | 1,5 | 1,5 |
| C-Emission [mg/kg] | 21 | 22 | 22 | 18 | 14 | 13 | 10 | 9 |

Die erfindungsgemäßen Formmassen weisen somit eine verbesserte Kerbschlagzähigkeit bei -30°C auf. Überraschenderweise weisen die erfindungsgemäßen Produkte auch eine geringere Emissionsneigung auf.

## Patentansprüche

1. Thermoplastische Formmasse, enthaltend folgende Komponenten:
A) 3 bis 77 Gew.-% eines oder mehrerer Styrolcopolymere, als Komponente A,
B) 15 bis 89 Gew.-% eines oder mehrerer Polyamide, als Komponente B,
C) 5 bis 50 Gew.% zweier oder mehrerer Pfropfkautschuke ohne olefinische Doppelbindungen in der Kautschukphase, als Komponente C,
D) 1 bis 25 Gew.% eines Terpolymeren aus Styrol, Acrylnitril und Maleinsäureanhydrid, als Komponente D,
E) 2 bis 30 Gew.-% Kautschuk auf Basis von olefinischen Monomeren, als Komponente E, wobei diese Kautschuke **dadurch gekennzeichnet sind, dass** sie
a) keinen Kern-Schale-Aufbau aufweisen und
b) mindestens 0,05 Gew.% einer funktionellen Gruppe aufweisen,
F) 0 bis 50 Gew.-% faser- oder teilchenförmigen Füllstoffs oder deren Mischungen, als Komponente F,
G) 0 bis 40 % weiterer Zusätze, als Komponente G,
wobei die Gew.-% jeweils auf das Gesamtgewicht der Komponenten A bis G bezogen sind und zusammen 100 Gew.-% ergeben.

2. Thermoplastische Formmasse gemäß Anspruch 1, enthaltend:
A) 10 bis 70 Gew.-% eines oder mehrerer Styrolcopolymere, als Komponente A,
B) 20 bis 60 Gew.-% eines oder mehrerer Polyamide, als Komponente B,
C) 14 bis 35 Gew.% zweier oder mehrerer Pfropfkautschuke ohne olefinische Doppelbindungen in der Kautschukphase, als Komponente C,
D) 2 bis 10 Gew.% eines Terpolymeren aus Styrol, Acrylnitril und Maleinsäureanhydrid, als Komponente D,
E) 3 bis 30 Gew.-% Kautschuk auf Basis von olefinischen Monomeren, als Komponente E,
F) 0 bis 50 Gew.-% faser- oder teilchenförmigen Füllstoffs oder deren Mischungen, als Komponente F,
G) 0 bis 40 % weiterer Zusätze, als Komponente G,
wobei die als Komponente C) eingesetzte Mischung aus mindestens zwei verschiedenen Pfropfkautschuken besteht, die sich bezüglich ihrer Pfropfhüllen unterscheiden, wobei der erste Pfropfkautschuk der Komponente C) eine Pfropfhülle aus Styrol und Acrylnitril aufweist und der zweite Pfropfkautschuk der Komponente C) eine Pfropfhülle aufweist, die Glycidylmethacrylat enthält.

3. Thermoplastische Formmasse gemäß Anspruch 1 oder 2, enthaltend:
A) 10 bis 70 Gew.-% eines SAN-Copolymers, als Komponente A,
B) 20 bis 60 Gew.-% eines oder mehrerer Polyamide, als Komponente B,
C) 14 bis 35 Gew.% zweier oder mehrerer Pfropfkautschuke ohne olefinische Doppelbindungen in der Kautschukphase, als Komponente C,
D) 2 bis 10 Gew.% eines Styrol-Acrylnitril-Maleinsäureanhydrid-Terpolymers als Komponente D,
E) 3 bis 30 Gew.-% Kautschuk auf Basis von olefinischen Monomeren, als Komponente E,
F) 0 bis 50 Gew.-% faser- oder teilchenförmigen Füllstoffs oder deren Mischungen, als Komponente F,
G) 0 bis 40 % weiterer Zusätze, als Komponente G,
wobei die als Komponente C) eingesetzte Mischung aus mindestens zwei verschiedenen Pfropfkautschuken besteht, die sich nur bezüglich ihrer Pfropfhüllen unterscheiden.

4. Thermoplastische Formmasse nach einem der Ansprüche 1 bis 3, **dadurch gekennzeichnet, dass** der mittlere Teilchendurchmesser von Komponente C zwischen 50 bis 800 nm liegt.

5. Thermoplastische Formmasse nach einem der Ansprüche 1 bis 4, **dadurch gekennzeichnet, dass** man als Komponente C zwei verschiedenen Kautschuk-Komponenten einsetzt, wobei mindestens einer der Kautschuke eine bimadale Teilchengrößenverteilung aufweist.

6. Thermoplastische Formmasse nach einem der Ansprüche 1 bis 5, **dadurch gekennzeichnet, dass** der erste Pfropfkautschuk der Komponente C eine Pfropfhülle aus Styrol und Acrylnitril aufweist und der zweite Pfropfkautschuk der Komponente C eine Pfropfhülle aufweist, die Glycidylmethacrylat enthält.

7. Thermoplastische Formmasse nach einem der Ansprüche 1 bis 6, **dadurch gekennzeichnet, dass** Komponente B von 0,05 bis 0,5 Gew.-% Triacetondiamin (TAD)-Endgruppen aufweist.

8. Thermoplastische Formmasse nach einem der Ansprüche 1 bis 7, **dadurch gekennzeichnet, dass** sie als Komponente C) zwei Pfropfkautschuke enthält und der erste Pfropfkautschuk der Komponente C) eine Pfropfhülle aus Styrol und Acrylnitril aufweist und der zweite Pfropfkautschuk eine Pfropfhülle aufweist, die aus Glycidylmethacrylat und Methylmethacrylat besteht.

9. Verfahren zur Herstellung von thermoplastischen Formmassen nach einem der Ansprüche 1 bis 8, **dadurch gekennzeichnet, dass** man die Komponenten A, B, C, D und E, sowie ggf. F und G, bei Temperaturen von 100 bis 300°C und einem Druck von 0,1 bis 5 MPa (1 bis 50 bar) in beliebiger Reihenfolge miteinander vermischt, anschließend knetet und extrudiert.

10. Verfahren zur Herstellung von thermoplastischen Formmassen nach Anspruch 9, **dadurch gekennzeichnet, dass** man zunächst ein Teil der Komponente D mit einem Teil der Komponente B zu einem Masterbatch im Verhältnis 1:1 bis 1:2 vormischt und anschließend mit weiteren Komponenten A, B, C, D und E, sowie ggf. F und G, zu der thermoplastischen Formmasse vermischt.

11. Verwendung von thermoplastischen Formmassen nach einem der Ansprüche 1 bis 8 zur Herstellung von Formkörpern, Folien oder Fasern.

12. Verwendung der thermoplastischen Formmassen nach Anspruch 11 zur Herstellung von Formkörpern für KFZ-Bauteile oder Teile von Elektronikgeräten.

13. Formkörper, Fasern oder Folien enthaltend bzw. bestehend aus einer thermo-plastischen Formmasse nach einem der Ansprüche 1 bis 8.

## Claims

1. A thermoplastic molding composition comprising the following components:
A) 3 to 77 wt% of one or more styrene copolymers, as component A,
B) 15 to 89 wt% of one or more polyamides, as component B,
C) 5 to 50 wt% of two or more graft rubbers without olefinic double bonds in the rubber phase, as component C,
D) 1 to 25 wt% of a terpolymer of styrene, acrylonitrile, and maleic anhydride, as component D,
E) 2 to 30 wt% of rubber based on olefinic monomers, as component E, wherein said rubbers are **characterized in that** they
a) do not have core-shell construction and
b) contain at least 0.05 wt% of a functional group.
F) 0 to 50 wt% of fibrous or particulate filler or mixtures thereof, as component F,
G) 0 to 40% of further adjuvants, as component G,
the wt% being based in each case on the total weight of components A to G and together making 100 wt%.

2. The thermoplastic molding composition as claimed in claim 1, comprising:
A) 10 to 70 wt% of one or more styrene copolymers, as component A,
B) 20 to 60 wt% of one or more polyamides, as component B,
C) 14 to 35 wt% of two or more graft rubbers without olefinic double bonds in the rubber phase, as component C,
D) 2 to 10 wt% of a terpolymer of styrene, acrylonitrile, and maleic anhydride, as component D,
E) 3 to 30 wt% of rubber based on olefinic monomers, as component E,
F) 0 to 50 wt% of fibrous or particulate filler or mixtures thereof, as component F,
G) 0 to 40% of further adjuvants, as component G,
where the mixture used as component C) consists of at least two different graft rubbers which differ in their graft shells, the first graft rubber of component C) having a graft shell of styrene and acrylonitrile, and the second graft rubber of component C) having a graft shell which comprises glycidyl methacrylate.

3. The thermoplastic molding composition as claimed in claim 1 or 2, comprising:
A) 10 to 70 wt% of a SAN copolymer, as component A,
B) 20 to 60 wt% of one or more polyamides, as component B,
C) 14 to 35 wt% of two or more graft rubbers without olefinic double bonds in the rubber phase, as component C,
D) 2 to 10 wt% of a styrene-acrylonitrile-maleic anhydride terpolymer as component D,
E) 3 to 30 wt% of rubber based on olefinic monomers, as component E,
F) 0 to 50 wt% of fibrous or particulate filler or mixtures thereof, as component F,
G) 0 to 40% of further adjuvants, as component G,
where the mixture used as component C) consists of at least two different graft rubbers which differ only in their graft shells.

4. The thermoplastic molding composition as claimed in any of claims 1 to 3, **characterized in that** the average particle diameter of component C is between 50 to 800 nm.

5. The thermoplastic molding composition as claimed in any of claims 1 to 4, **characterized in that** two different rubber components are used as component C, at least one of the rubbers having a bimodal particle size distribution.

6. The thermoplastic molding composition as claimed in any of claims 1 to 5, **characterized in that** the first graft rubber of component C has a graft shell of styrene and acrylonitrile, and the second graft rubber of component C has a graft shell which comprises glycidyl methacrylate.

7. The thermoplastic molding composition as claimed in any of claims 1 to 6, **characterized in that** component B has from 0.05 to 0.5 wt% of triacetonediamine (TAD) end groups.

8. The thermoplastic molding composition as claimed in any of claims 1 to 7, **characterized in that** it comprises two graft rubbers as component C), and the first graft rubber of component C) has a graft shell of styrene and acrylonitrile, and the second graft rubber has a graft shell which consists of glycidyl methacrylate and methyl methacrylate.

9. A process for producing thermoplastic molding compositions as claimed in any of claims 1 to 8, **characterized in that** components A, B, C, D, and E, and also optionally F and G, are mixed with one another in any order at temperatures of 100 to 300°C under a pressure of 0.1 to 5 MPa (1 to 50 bar) and the mixture is subsequently kneaded and extruded.

10. The process for producing thermoplastic molding compositions as claimed in claim 9, **characterized in that** first a part of component D is premixed with a part of component B to form a masterbatch in a ratio of 1:1 to 1:2 and said masterbatch is subsequently mixed with further components A, B, C, D, and E, and also optionally F and G, to give the thermoplastic molding composition.

11. The use of thermoplastic molding compositions as claimed in any of claims 1 to 8 for producing moldings, foils, or fibers.

12. The use of the thermoplastic molding compositions as claimed in claim 11 for producing moldings for automotive components or parts of electronic devices.

13. Moldings, fibers, or foils comprising or consisting of a thermoplastic molding composition as claimed in any of claims 1 to 8.

## Revendications

1. Composition de moulage thermoplastique, comprenant les composants suivants :
A) en tant que composant A, de 3 à 77% en poids d'un ou plusieurs copolymères de styrène,
B) en tant que composant B, de 15 à 89% en poids d'un ou plusieurs polyamides,
C) en tant que composant C, de 5 à 50% en poids d'au moins deux caoutchoucs greffés sans doubles liaisons oléfiniques dans la phase caoutchouteuse,
D) en tant que composant D, de 1 à 25 % en poids d'un terpolymère de styrène, d'acrylonitrile et d'anhydride maléique
E) en tant que composant E, de 2 à 30% en poids de caoutchouc sur la base des monomères oléfiniques, ce caoutchouc étant **caractérisé en ce que**
a) il ne présente aucun système noyau-enveloppe et
b) il présente au moins 0,05% en poids d'un groupe fonctionnel,
F) comme composant F, de 0 à 50% en poids de matière de remplissage fibreuse ou particulaire ou de leurs mélanges,
G) en tant que composant G, de 0 à 40% d'autres additifs,
composition de moulage thermoplastique dans laquelle le pourcentage en poids est dans chaque cas exprimé par rapport au poids total des composants A à G qui forment ensemble 100% en poids.

2. Composition de moulage thermoplastique selon la revendication 1, comprenant:
A) en tant que composant A, de 10 à 70% en poids d'un ou plusieurs copolymères de styrène,
B) en tant que composant B, de 20 à 60% en poids d'un ou plusieurs polyamides
C) en tant que composant C, 14 à 35 % en poids d'au moins deux caoutchoucs greffés sans double liaison oléfinique dans la phase caoutchouteuse,
D) en tant que composant D, de 2 à 10 % en poids d'un terpolymère de styrène, d'acrylonitrile et d'anhydride maléique,
E) en tant que composant E, de 3 à 30% en poids de caoutchouc sur la base des monomères oléfiniques,
F) comme composant F, de 0 à 50% de matière de remplissage fibreuse ou particulaire ou de leurs mélanges,
G) en tant que composant G, de 0 à 40% d'autres additifs,
dans laquelle le mélange utilisé en tant que composant C) est constitué d'au moins deux caoutchoucs greffés différents, qui diffèrent par leurs enveloppes greffées, le premier caoutchouc greffé du composant C) comportant une enveloppe greffée composée de styrène et d'acrylonitrile et le deuxième caoutchouc greffé du composant C) présentant une enveloppe greffée contenant du méthacrylate de glycidyle.

3. Composition de moulage thermoplastique selon la revendication 1 ou 2, comprenant:
A) en tant que composant A, de 10 à 70% en poids d'un copolymère SAN,
B) en tant que composant B, de 20 à 60% en poids d'un ou plusieurs polyamides,
C) en tant que composant C, de 14 à 35 % en poids d'au moins deux caoutchoucs greffés sans double liaison oléfinique dans la phase caoutchouteuse,
D) en tant que composant D, de 2 à 10 % en poids d'un terpolymère styrène-acrylonitrile-anhydride maléique,
E) en tant que composant E, de 3 à 30% en poids de caoutchouc sur la base des monomères oléfiniques,
F) comme composant F, de 0 à 50% en poids de matière de remplissage fibreuse ou particulaire ou de leurs mélanges,
G) en tant que composant G, de 0 à 40% d'autres additifs,
dans laquelle le mélange utilisé en tant que composant C) est constitué d'au moins deux caoutchoucs greffés différents, qui ne se distinguent que par leurs enveloppes greffées.

4. Composition de moulage thermoplastique selon l'une quelconque des revendications 1 à 3, **caractérisée en ce que** le diamètre moyen des particules du composant C est compris entre 50 et 800 nm.

5. Composition de moulage thermoplastique selon l'une quelconque des revendications 1 à 4, **caractérisée en ce que** comme composant C sont utilisés deux différents composants de caoutchouc, dans lequel au moins un des caoutchoucs présente une distribution bimodale de tailles de particules.

6. Composition de moulage thermoplastique selon l'une quelconque des revendications 1 à 5, **caractérisée en ce que** le premier caoutchouc greffé du composant C présente une enveloppe greffée formée de styrène et d'acrylonitrile et **en ce que** le deuxième caoutchouc greffé du composant C présente une enveloppe greffée qui contient du méthacrylate de glycidyle.

7. Composition de moulage thermoplastique selon l'une quelconque des revendications 1 à 6, **caractérisée en ce que** le composant B présente de 0,05 à 0,5% en poids de groupes terminaux triacétonediamine (TAD).

8. Composition de moulage thermoplastique selon l'une quelconque des revendications 1 à 7, **caractérisée en ce qu'**elle contient en tant que composant C) deux caoutchoucs greffés et le premier caoutchouc greffé du composant C) présente une enveloppe greffée constituée de styrène et d'acrylonitrile et le deuxième caoutchouc greffé présente une enveloppe greffée constituée de méthacrylate de glycidyle et de méthylméthacrylate de méthyle.

9. Procédé de production de compositions de moulage thermoplastiques selon l'une quelconque des revendications 1 à 8, **caractérisé en ce que** les composants A, B, C, D et E, ainsi qu'éventuellement F et G, sont mélangés puis malaxés et extrudés, selon n'importe quel ordre, à des températures de 100 à 300°C et sous une pression de 1 à 50 bars (0,1 à 5 MPa).

10. Procédé pour la production de compositions de moulage thermoplastiques selon la revendication 9, **caractérisé en ce que** tout d'abord une partie du composant D est mélangée avec une partie du composant B dans le rapport de 1/1 à 1/2 pour former un mélange-maître puis ensuite avec d'autres composants A, B, C, D et E, ainsi qu'éventuellement F et G pour former la composition de moulage thermoplastique.

11. Utilisation des compositions de moulage thermoplastiques selon l'une quelconque des revendications 1 à 8, pour la production de pièces moulées, de feuilles ou de fibres.

12. Utilisation de compositions de moulage thermoplastiques selon la revendication 11, pour la fabrication de pièces moulées pour pièces d'automobiles ou pièces d'équipement électronique.

13. Pièces moulées, feuilles ou fibres comprenant ou consistant en une composition de moulage thermoplastique selon l'une quelconque des revendications 1 à 8.
